# EUROPEAN PATENT APPLICATION

(11) **EP 4 787 878 A1**
(43) Date of publication of application: **05.08.2026**
(21) Application number: 24870950.3
(22) Date of filing: 27.09.2024
(51) Int. Cl.: H04N 23/55

(54) **IMAGE ACQUISITION DEVICE, TERMINAL AND METHOD FOR VIDEO CONFERENCE, AND STORAGE MEDIUM**

(30) Priority: 27.09.2023 CN 202311267503
(71) Applicant: Guangzhou Shiyuan Electronic Technology Company Limited, Guangzhou, Guangdong 510530 (CN); Guangzhou Shirui Electronics Co., Ltd., Guangzhou, Guangdong 510663 (CN)
(72) Inventor: ZHOU, Xiaolu, Guangzhou, Guangdong 510530 (CN)
(74) Representative: Winter, Brandl - Partnerschaft mbB
(86) International application number: PCT/CN2024/121709
(87) International publication number: WO 2025/067413

(57) **Abstract**

Embodiments of the present application disclose an image acquisition apparatus and method for video conferencing, a terminal, and a storage medium, and relate to the technical field of camera terminals. The apparatus includes: a wide-angle lens configured to obtain a first field-of-view area; and a plurality of telephoto lenses arranged centrally symmetrically with respect to the wide-angle lens, where optical axes of the plurality of telephoto lenses and an optical axis of the wide-angle lens intersect at a same virtual optical center, and an absolute value of a difference between a second field-of-view area obtained by combining field-of-view areas of the plurality of telephoto lenses and the first field-of-view area is less than a field-of-view area threshold. According to the image acquisition apparatus of embodiments of the present application, the wide-angle lens and the telephoto lenses can be used in combination not only to increase the field of view coverage but also to magnify the picture without loss. Based on the setting of the virtual optical center and the field-of-view areas, image distortion caused by different focusing information of different lenses is avoided, and the telephoto lenses can be used in combination for magnified close-up in most of the field-of-view area of the wide-angle lens.

## Description

### CROSS-REFERENCE TO RELATED APPLICATIONS

The present application claims priority to Chinese Patent Application No. 202311267503.0, filed on September 27, 2023 and entitled "IMAGE ACQUISITION APPARATUS AND METHOD FOR VIDEO CONFERENCING, TERMINAL, AND STORAGE MEDIUM", which is incorporated herein by reference in its entirety.

### TECHNICAL FIELD

The present application relates to the technical field of camera terminals, and in particular to an image acquisition apparatus and method for video conferencing, a terminal, and a storage medium.

### BACKGROUND

Current video conferencing has two requirements for imaging effects: providing panoramic coverage as much as possible and also delivering clear close-up shots of distant objects. It is difficult for current devices to achieve both panoramic coverage and high image clarity of images obtained during video conferencing. A wide-angle camera has a large field of view and can capture an image of a large scene. However, due to a decrease in the number of pixels per unit area, when a wide-shot image is magnified, the image clarity is severely compromised. A telephoto lens can capture a sufficiently clear image, but the field of view is small and cannot cover most of the scene.

In some related technologies, in order to improve the clarity of important areas in a large-scene image captured by a wide-angle camera, more and more equipment manufacturers have electronic devices equipped with a plurality of lenses, and images captured by the plurality of lenses are stitched and synthesized through image matching algorithms. However, existing lenses suffer from image distortion when imaging, and the quality of images acquired by a plurality of lenses for capturing different shots is low. This leads to a high difficulty in image stitching and synthesis algorithms, requiring high computing power for image acquisition devices.

### SUMMARY OF THE INVENTION

Embodiments of the present application provide an image acquisition apparatus and method for video conferencing, a terminal, and a storage medium, to solve the defect of not being able to achieve both panoramic coverage and high image clarity of images in the above-mentioned related technologies. The technical solutions are as follows:

In a first aspect, an embodiment of the present application provides an image acquisition apparatus for video conferencing. The apparatus includes:
one wide-angle lens configured to obtain a first field-of-view area; and
a plurality of telephoto lenses arranged centrally symmetrically with respect to the wide-angle lens, where optical axes of the plurality of telephoto lenses and an optical axis of the wide-angle lens intersect at a same virtual optical center, and an absolute value of a difference between a second field-of-view area obtained by combining field-of-view areas of the plurality of telephoto lenses and the first field-of-view area is less than a field-of-view area threshold.

In an optional solution of the first aspect, an included angle between the optical axis of the telephoto lens and the optical axis of the wide-angle lens is not less than half of a field of view of the telephoto lens.

In an optional solution of the first aspect, the telephoto lenses at the same distance from the wide-angle lens have the same field of view.

In an optional solution of the first aspect, all of the telephoto lenses have the same field of view.

In an optional solution of the first aspect, there is an overlapping third field-of-view area between the field-of-view areas of each two of the telephoto lenses, and a width of a projection of the third field-of-view area on a horizontal plane at a preset distance from the apparatus is not less than a field-of-view width threshold.

In an optional solution of the first aspect, the apparatus further includes at least one annular rotation mechanism, where a rotation axis of the annular rotation mechanism coincides with the optical axis of the wide-angle lens, the annular rotation mechanism includes a plurality of rotation bases, each of the rotation bases is at the same distance from an optical center of the wide-angle lens, each of the rotation bases has one of the telephoto lenses provided thereon, and the rotation mechanism drives the telephoto lenses through the rotation bases to rotate around the optical axis of the wide-angle lens.

In an optional solution of the first aspect, the apparatus further includes a rotation base having the telephoto lens detachably provided thereon, where a plane in which a rotation axis of the rotation base is located is perpendicular to a plane in which the optical axis of the wide-angle lens is located, and the rotation base is configured to drive the telephoto lens to rotate around the rotation axis of the rotation base to adjust the included angle between the optical axis of the telephoto lens and the optical axis of the wide-angle lens.

In a second aspect, an embodiment of the present application further provides a terminal. The terminal includes:
a housing including a cavity in which the image acquisition apparatus according to any one of the first aspect or the optional solutions thereof is mounted,
where object-side ends of both the wide-angle lens and the telephoto lenses are outside the housing.

In a third aspect, an embodiment of the present application further provides an image acquisition method, which is applied to the image acquisition apparatus according to any one of the first aspect or the optional solutions thereof. The method includes the following steps:
determining an object to be focused in the first field-of-view area, and obtaining a distance between the object to be focused and the apparatus; and
magnifying, by using the wide-angle lens, the object to be focused to generate a first focused image, in response to the distance between the object to be focused and the apparatus being less than a first distance threshold;
first magnifying, by using the wide-angle lens, the object to be focused until a magnification power of the wide-angle lens reaches a first magnification power, and switching to a corresponding telephoto lens to continue to magnify the object to be focused to generate a second focused image, in response to the distance between the object to be focused and the apparatus being greater than or equal to the first distance threshold and less than a second distance threshold; or
magnifying, by using the wide-angle lens and the telephoto lens in sequence, the object to be focused until a magnification power of the telephoto lens reaches a second magnification power, and performing digital magnification on the basis of a focused image generated by the telephoto lens to generate a third focused image, in response to the distance between the object to be focused and the apparatus being greater than or equal to the second distance threshold.

In a fourth aspect, the present application further provides a non-transitory computer-readable storage medium having a computer program stored thereon. The computer program, when executed by a processor, causes the method according to any one of the first aspect or the implementations of the first aspect of embodiments of the present application to be implemented.

The beneficial effects brought by the technical solutions provided in some embodiments of the present application include at least the following:
According to the image acquisition apparatus for video conferencing provided in embodiments of the present application, the first field-of-view area is obtained through the wide-angle lens, so that the viewing angle coverage in a video conferencing scene can be increased. The plurality of telephoto lenses are arranged centrally symmetrically with respect to the wide-angle lens, and the optical axes of the plurality of telephoto lenses and the optical axis of the wide-angle lens intersect at the same virtual optical center, so that the plurality of telephoto lenses and the wide-angle lens create an overlapping area, facilitating the synthesis of an image. In this way, the telephoto lenses and the wide-angle lens can be integrated to magnify the picture without loss, ensuring the quality of the acquired image and avoiding image distortion caused by different focusing information of different lenses. This is conducive to reducing the difficulty of the image stitching and synthesis algorithms, and eliminates the need for complex image algorithms. Further, the absolute value of the difference between the second field-of-view area obtained by combining the field-of-view areas of the plurality of telephoto lenses and the first field-of-view area is set to be less than the field-of-view area threshold, ensuring that the union of the field-of-view areas obtained through fitting for the telephoto lens can cover most of the field-of-view area corresponding to the wide-angle lens. In this way, magnified close-up can be performed in most of the field-of-view area of the wide-angle lens.

### BRIEF DESCRIPTION OF DRAWINGS

In order to more clearly describe the technical solutions in the present application or in the related art, the accompanying drawings for describing the embodiments or the related art will be briefly described below. Apparently, the accompanying drawings in the description below show some embodiments of the present application, and those of ordinary skill in the art may still derive other drawings from these accompanying drawings without creative efforts.
FIG. 1 is a schematic diagram of an application scenario of an image acquisition apparatus according to an embodiment of the present application;
FIG. 2 is a schematic diagram of a structure of an image acquisition apparatus according to an embodiment of the present application;
FIG. 3 is a schematic plan view of a structure of an image acquisition apparatus according to an embodiment of the present application;
FIG. 4 is a schematic diagram of a structure of an image acquisition apparatus according to an embodiment of the present application;
FIG. 5 is a schematic diagram of a structure of an image acquisition apparatus according to an embodiment of the present application;
FIG. 6 is a schematic plan view of a field-of-view area of an image acquisition apparatus according to an embodiment of the present application;
FIG. 7 is a schematic plan view of a field-of-view area of an image acquisition apparatus according to an embodiment of the present application;
FIG. 8 is a schematic plan view of a field-of-view area of an image acquisition apparatus according to an embodiment of the present application;
FIG. 9 is a schematic diagram of a structure of an image acquisition apparatus according to an embodiment of the present application;
FIG. 10 is a schematic diagram of a structure of an image acquisition apparatus according to an embodiment of the present application;
FIG. 11 is a schematic diagram of a structure of an image acquisition apparatus according to an embodiment of the present application;
FIG. 12 is a schematic diagram of a structure of a terminal according to an embodiment of the present application; and
FIG. 13 is a schematic flowchart of an image acquisition method according to an embodiment of the present application.

### DETAILED DESCRIPTION

In order to make the objectives, technical solutions and advantages of the present application clearer, the technical solutions of the present application will be described clearly and completely below with reference to the accompanying drawings of the present application. Apparently, the embodiments described are some of, rather than all of, the embodiments of the present application. All other embodiments obtained by those of ordinary skill in the art based on the embodiments of the present application without creative efforts shall fall within the scope of protection of the present application.

The terms "comprising" and "having" and any variations thereof in the description and the claims of the present application as well as the accompanying drawings described above are intended to cover non-exclusive inclusion. For example, a process, a method, a system, a product, or a device that includes a series of steps or modules is not limited to the listed steps or modules, but optionally further includes an unlisted step or module, or optionally further includes another step or module inherent to the process, the method, the product, or the device.

It should be noted that the terms "first/second" in the present application are merely used to distinguish similar objects and do not represent a specific order for the objects. It can be understood that "first/second" can be interchanged in a specific order or sequence where permitted. It should be understood that the objects distinguished by "first/second" may be interchanged where appropriate, so that the embodiments of the present application described herein can be implemented in an order other than those described or illustrated herein.

In the related art, a telephoto lens has a relatively long focal length and high clarity, but a small field of view, while a wide-angle lens has a relatively short focal length and low clarity, but a large field of view. In some special scenarios, using either a telephoto lens or a wide-angle lens alone cannot meet the needs of users. The wide-angle lens and the telephoto lens can be integrated into the same image acquisition device. A larger imaging range may be obtained through the wide-angle lens. However, due to different imaging magnification powers of the center and edge of the field of view of the wide-angle lens, image distortion occurs at the edges of the image after imaging. If the diaphragm of the wide-angle lens is set to be too large, stray light is easily let in and causes interference, leading to issues such as flare and veiling glare. When imaging is performed jointly through the telephoto lens and the wide-angle lens, since there is an overlapping imaging area between the plurality of lenses, an image information overlap will occur in the overlapping imaging area, resulting in image information loss and image distortion. In order to prevent image distortion, it is necessary to capture sequential shots at certain intervals, which results in prolonged imaging time and fails to meet the real-time requirements of video conferencing.

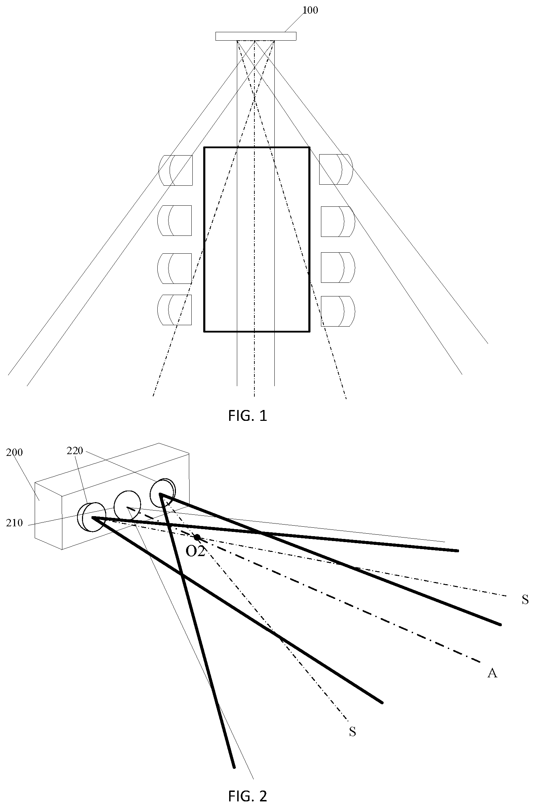

Next, referring to FIG. 1, FIG. 1 is a schematic diagram of an application scenario of an image acquisition apparatus according to an exemplary embodiment of the present application.

As shown in FIG. 1, the image acquisition apparatus 100 provided in this embodiment of the present application is suitable for use in a video conferencing scenes including, but not limited to, conference rooms, conference halls, classrooms, rooms, and other places. When the image acquisition apparatus 100 is set at a preset position in the video conferencing scene, a wide-angle lens in the image acquisition apparatus 100 covers the main area of the conferencing scene. A field-of-view area obtained by combining field-of-view areas of a plurality of telephoto lenses is approximately the same as a field-of-view area of the wide-angle lens. That is, in the area covered by the wide-angle lens, a close-up of an object can be achieved through the telephoto lens. In this way, most of the field of view in the scene can be covered, and a clear close-up of a person in the scene can also be provided.

Further, the image acquisition apparatus provided in this embodiment of the present application may also be applied to a remote video conferencing system. A network connection is established between at least two terminals participating in a remote conference, so that remote participants can participate in the remote conference through the remote video conferencing system.

Next, referring to FIG. 2, FIG. 2 is a schematic diagram of a structure of an image acquisition apparatus according to an embodiment of the present application. The apparatus 200 includes one wide-angle lens 210 and a plurality of telephoto lenses 220.

The wide-angle lens 210 is configured to obtain a first field-of-view area.

The plurality of telephoto lenses 220 are arranged centrally symmetrically with respect to the wide-angle lens 210, optical axes S of the plurality of telephoto lenses 220 and an optical axis A of the wide-angle lens 210 intersect at a same virtual optical center O2, and an absolute value of a difference between a second field-of-view area obtained by combining field-of-view areas of the plurality of telephoto lenses 220 and the first field-of-view area is less than a field-of-view area threshold.

Specifically, both the wide-angle lens 210 and the telephoto lenses 220 are lenses with a fixed focal length and a fixed field of view, and parameters of the wide-angle lens 220 and the telephoto lenses 210 are selected according to the video conferencing scene in which the apparatus is used.

Specifically, an area captured by the wide-angle lens 220 is the first field-of-view area, such as the thin solid line area shown in FIG. 2. A size of the first field-of-view area captured by the wide-angle lens 210 is positively correlated with a size of the field of view of the selected wide-angle lens. The field of view of the wide-angle lens 210 is greater than the field of view of the telephoto lens, and the obtained first field-of-view area should cover most of the area of the conference scene. Each telephoto lens 220 captures a corresponding telephoto field-of-view area, such as the thick solid line area shown in FIG. 2. The field-of-view areas of the plurality of telephoto lenses are combined and fitted to obtain the second field-of-view area, which may be understood as the union of the field-of-view areas of the plurality of telephoto lenses. A size of the second field-of-view area depends on a size of the field of view of each telephoto lens and a position of the virtual optical center. The final second field-of-view area should substantially overlap the first field-of-view area.

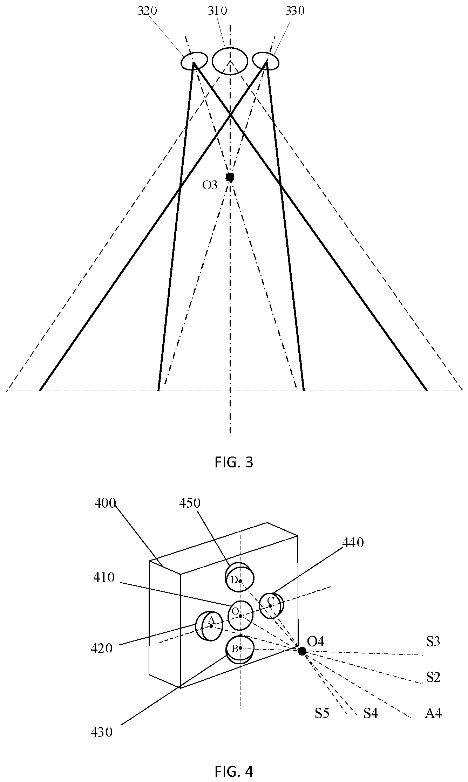

For example, a case of two telephoto lenses is described with reference to a schematic plan view, shown in FIG. 3, of a structure of an image acquisition apparatus according to an embodiment of the present application. FIG. 3 shows a projection of the field-of-view areas on a horizontal plane. A telephoto lens 320 and a telephoto lens 330 are centrally symmetrically arranged on two sides of a wide-angle lens 310, the telephoto lens 320 and the telephoto lens 330 are at the same distance from the wide-angle lens 310, optical axes of the telephoto lens 320 and the telephoto lens 330 and an optical axis of the wide-angle lens 310 intersect at a virtual optical center O3. The optical axes of the telephoto lens 320 and the telephoto lens 330 and the optical axis of the wide-angle lens 310 are shown as the dash-dotted lines in FIG. 3, the field-of-view areas of the telephoto lens 320 and the telephoto lens 330 are shown as the thick solid line areas in FIG. 3, and the first field-of-view area of the wide-angle lens 310 is shown as the dashed line area in FIG. 3. The first field-of-view area of the wide-angle lens is denoted as M1, and the second field-of-view area obtained by fitting the field-of-view areas of the telephoto lenses is denoted as M2. A difference between M1 and M2 is calculated. The smaller the difference between M1 and M2, the closer the first field-of-view area of the wide-angle lens is to the second field-of-view area obtained through fitting for the telephoto lenses, so that the telephoto lenses can magnify an object in most of the field-of-view area of the wide-angle lens. The field-of-view area threshold may be set according to the scale of the conference scene used and the parameters of selected lenses, and it is not limited in embodiments of the present application.

Optionally, an overlap rate of the first field-of-view area M1 of the wide-angle lens and the second field-of-view area M2 obtained by fitting the field-of-view areas of the telephoto lenses with respect to the first field-of-view area of the wide-angle lens may be calculated. The intersection of the first field-of-view area M1 and the second field-of-view area M2 may be calculated and denoted as M1∩M2. Then the overlap rate with respect to the first field-of-view area of the wide-angle lens is (M1nM2)/M2. A proportion of the first field-of-view area of the wide-angle lens that is covered by the telephoto lenses can be determined based on a size of the overlap rate. If the overlap rate is less than a set overlap rate threshold, it indicates that the fields of view of the telephoto lenses do not meet the requirements.

It can be understood that the field of view and focal length of the telephoto lens, and the field of view and focal length of the wide-angle lens may be determined through optical simulation. The field of view and focal length of the wide-angle lens and the telephoto lens depend on an estimated spatial size of the video conferencing scene. If the space is larger, a wide-angle lens with a larger field of view needs to be selected to cover the video conferencing scene. If the space is smaller, a wide-angle lens with a smaller field of view needs to be selected. Similarly, the larger the spatial scene, the longer the focal length of the selected telephoto lens needs to be, to capture a close-up image of a distant object. The longer the focal length of the telephoto lens, the smaller the field of view of the telephoto lens. In order for the field-of-view areas corresponding to the fields of view of the telephoto lenses and the wide-angle lens to match, the number of telephoto lenses may also be increased accordingly.

In one embodiment, the plurality of telephoto lenses may be arranged annularly and centrally symmetrically around the wide-angle lens.

For example, refer to FIG. 4, which is a schematic diagram of a structure of an image acquisition apparatus according to an embodiment of the present application. A case of four telephoto lenses being arranged annularly around a wide-angle lens is described. The apparatus 400 includes a telephoto lens 420, a telephoto lens 430, a telephoto lens 440, a telephoto lens 450, and one wide-angle lens 410.

Specifically, a distance from the telephoto lens 420 to an optical center O of the wide-angle lens 410 is AO, a distance from the telephoto lens 430 to the optical center O of the wide-angle lens 410 is BO, a distance from the telephoto lens 440 to the optical center O of the wide-angle lens is CO, and a distance from the telephoto lens 450 to the optical center O of the wide-angle lens 410 is DO. An optical axis S2 of the telephoto lens 420, an optical axis S3 of the telephoto lens 430, an optical axis S4 of the telephoto lens 440, an optical axis S5 of the telephoto lens 450, and an optical axis A4 of the wide-angle lens 410 intersect at a same virtual optical center O4. Since the plurality of telephoto lenses are arranged annularly and centrally symmetrically around the wide-angle lens, the distance AO is equal to the distance CO, and the distance BO is equal to the distance DO. The distance AO and the distance CO may not be equal to the distance BO and the distance DO. Included angles between the optical axes of the telephoto lens 420 and the telephoto lens 440 and the optical axis of the wide-angle lens 410 are the same, and included angles between the optical axes of the telephoto lens 430 and the telephoto lens 450 and the optical axis of the wide-angle lens are the same.

Optionally, when the distance AO, the distance CO, the distance BO, and the distance DO are all equal, the included angles between the optical axes of the telephoto lens 420, the telephoto lens 430, the telephoto lens 440, and the telephoto lens 450 and the optical axis of the wide-angle lens are the same. In this case, optical centers of the telephoto lens 420, the telephoto lens 430, the telephoto lens 440, and the telephoto lens 450 are located on the same circle with the wide-angle lens 410 as an optical center.

In one embodiment, the plurality of telephoto lenses are arranged in the same row or column as the wide-angle lens and are centrally symmetrical with respect to the wide-angle lens.

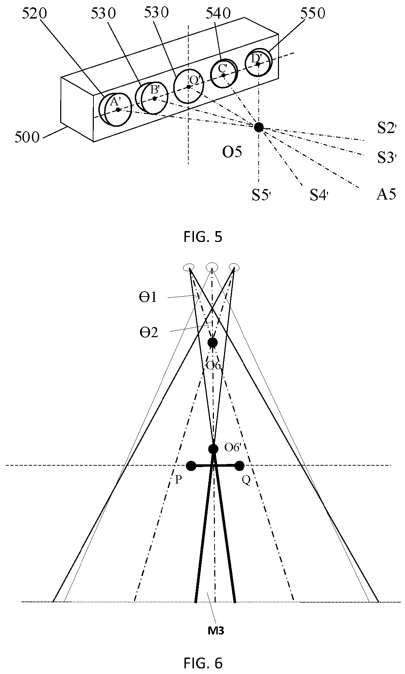

For example, refer to FIG. 5, which is a schematic diagram of a structure of an image acquisition apparatus according to an embodiment of the present application. A case of four telephoto lenses being arranged in the same column as a wide-angle lens is described. The apparatus 500 includes a telephoto lens 520, a telephoto lens 530, a telephoto lens 540, a telephoto lens 550, and one wide-angle lens 510.

Specifically, a distance from the telephoto lens 520 to an optical center O' of the wide-angle lens 510 is A'O', a distance from the telephoto lens 530 to the optical center O' of the wide-angle lens 510 is B'O', a distance from the telephoto lens 550 to the optical center O' of the wide-angle lens is C'O', and a distance from the telephoto lens 550 to the optical center O' of the wide-angle lens 510 is D'O'. An optical axis S2' of the telephoto lens 520, an optical axis S3' of the telephoto lens 530, an optical axis S4' of the telephoto lens 540, an optical axis S5' of the telephoto lens 550, and an optical axis A5 of the wide-angle lens 510 intersect at a same virtual optical center O5. Since the plurality of telephoto lenses are arranged in the same column as the wide-angle lens and are centrally symmetrical with respect to the wide-angle lens, the distance A'O is equal to the distance D'O', and the distance B'O' is equal to the distance C'O'. The distance A'O' and the distance D'O' are both greater than the distance B'O' and the distance C'O'. Included angles between the optical axes of the telephoto lens 520 and the telephoto lens 550 and the optical axis A5 of the wide-angle lens 510 are the same, and included angles between the optical axes of the telephoto lens 530 and the telephoto lens 550 and the optical axis A5 of the wide-angle lens are the same.

It can be understood that the plurality of telephoto lenses in the image acquisition apparatus provided in embodiments of the present application may be arranged annularly as shown in FIG. 4, or may be arranged in the same column as shown in FIG. 5. The arrangement of the telephoto lenses is not limited in embodiments of the present application.

Optionally, the distance between the telephoto lens and the wide-angle lens should be as small as possible, and the specific value depends on the volumes of the telephoto lens module and the wide-angle lens module, which is not limited in embodiments of the present application.

Preferably, each telephoto lens at the same distance from the wide-angle lens may be configured to have the same field of view parameters, and telephoto lenses at different distances from the wide-angle lens may be configured to have different field of view parameters, which is not limited in embodiments of the present application.

Preferably, similarly, each telephoto lens at the same distance from the wide-angle lens may be configured to have the same lens parameters, and telephoto lenses at different distances from the wide-angle lens may be configured to have different lens parameters.

Preferably, each telephoto lens may be configured to have the same field of view parameters, and similarly, each wide-angle lens may be configured to have the same lens parameters, which is not limited in embodiments of the present application.

Optionally, the lens parameters include, but are not limited to, focal length, resolution, frame rate, etc., which are not limited in embodiments of the present application.

Optionally, the wide-angle lens and the telephoto lenses may be arranged on a fixed bracket at a fixed angle, so as to lock the relative position relationship between the wide-angle lens and the telephoto lenses.

According to this embodiment of the present application, the first field-of-view area is obtained through the wide-angle lens, so that the viewing angle coverage in a video conferencing scene can be increased. The plurality of telephoto lenses are arranged centrally symmetrically with respect to the wide-angle lens, and the optical axes of the plurality of telephoto lenses and the optical axis of the wide-angle lens intersect at the same virtual optical center. In this way, the telephoto lenses and the wide-angle lens can be integrated to magnify the picture without loss, ensuring the quality of the acquired image and avoiding image distortion caused by different focusing information of different lenses. This eliminates the need for complex image algorithms. Further, the absolute value of the difference between the second field-of-view area obtained by combining the field-of-view areas of the plurality of telephoto lenses and the first field-of-view area is set to be less than the field-of-view area threshold, ensuring that the union of the field-of-view areas obtained through fitting for the telephoto lens can cover most of the field-of-view area corresponding to the wide-angle lens. In this way, magnified close-up can be performed in most of the field-of-view area of the wide-angle lens.

The inventor has found that there is an included angle between the optical axis of the telephoto lens and the optical axis of the wide-angle lens, and that if the field of view of the telephoto lens is less than a specific value, the boundary line of the projection of the field-of-view area of the telephoto lens on the horizontal plane will intersect with the optical axis of the wide-angle lens, which may easily lead to a field-of-view blind spot of the second field-of-view area obtained through fitting for telephoto lenses in the far area of the first field-of-view area of the wide-angle lens. For example, as shown in FIG. 6, two telephoto lenses are centrally symmetrically arranged on two sides of the wide-angle lens, the fields of view of the two telephoto lenses are the same, and the optical axes of the two telephoto lenses and the wide-angle lens intersect at a common virtual optical center O6. Half of the field of view of the telephoto lens is Θ1, and the included angle between the optical axis of the telephoto lens and the optical axis of the wide-angle lens is Θ2. Based on the geometric relationships, it is not difficult to determine that Θ1 is less than Θ2. Corresponding edges of the projections of the field-of-view areas of the two telephoto lenses on the horizontal plane intersect at a point O6'. The second field-of-view area thus fitted has a field-of-view blind spot M3 after extending to a certain distance. It is impossible to magnify the object through the telephoto lens in the field-of-view blind spot.

Based on this, an embodiment of the present application further provides an image acquisition apparatus. A plurality of telephoto lenses are arranged centrally symmetrically with respect to a wide-angle lens, optical axes of the plurality of telephoto lenses and an optical axis of the wide-angle lens intersect at a same virtual optical center, an included angle between the optical axis of the telephoto lens and the optical axis of the wide-angle lens is not less than half of a field of view of the telephoto lens, and an absolute value of a difference between a second field-of-view area obtained by combining field-of-view areas of the plurality of telephoto lenses and the first field-of-view area is less than a field-of-view area threshold.

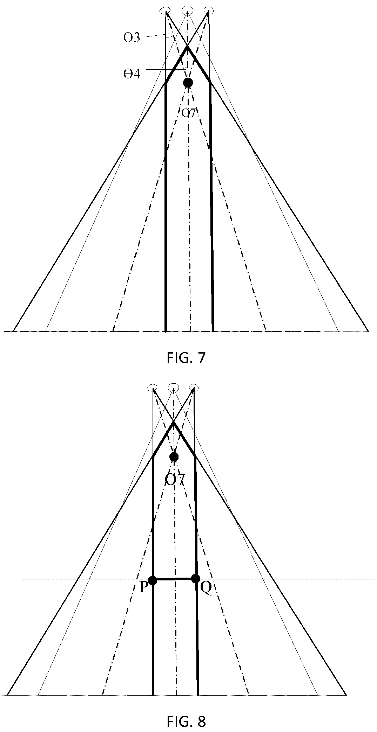

For example, referring to FIG. 7, FIG. 7 is a schematic plan view of a field-of-view area of an image acquisition apparatus. A case of two telephoto lenses with the same field of view being arranged on two sides of the wide-angle lens is described. When an included angle, Θ4, between the optical axis of the telephoto lens and the optical axis of the wide-angle lens is exactly equal to half of a field of view, Θ3, of the telephoto lens, corresponding edges of the projections of the field-of-view areas of the two telephoto lenses on the horizontal plane are parallel to each other and parallel to the projection of the optical axis of the wide-angle lens on the horizontal plane. That is, edges of an overlapping area between the two telephoto lenses are parallel to the projection of the optical axis of the wide-angle lens on the horizontal plane, which just ensures that there is no field-of-view blind spot at a certain distance from the image acquisition device.

It can be understood that it is not difficult to know based on the geometric analysis that: if the included angle between the optical axis of the telephoto lens and the optical axis of the wide-angle lens decreases, the corresponding edges of the projections of the field-of-view areas of the two telephoto lenses on the horizontal plane will intersect at the point O6', as shown in FIG. 6.

Therefore, the included angle between the optical axis of the telephoto lens and the optical axis of the wide-angle lens is set to be not less than half of the field of view of the telephoto lens; that is, the included angle between the optical axis of the telephoto lens and the optical axis of the wide-angle lens should be greater than or equal to half of the field of view of the telephoto lens, thereby avoiding the presence of a field-of-view blind spot at a certain distance from the image acquisition device.

It can be understood that if the scene in which the image acquisition device is used is small, for example, only an image of an area between O6' and the image acquisition device in FIG. 6 needs to be acquired, there will be no field-of-view blind spot in the scene even if the included angle between the optical axis of the telephoto lens and the optical axis of the wide-angle lens should be less than half of the field of view of the telephoto lens.

Preferably, there is an overlapping third field-of-view area between the field-of-view areas of each two of the telephoto lenses, and a width of the projection of the third field-of-view area on the horizontal plane at a preset distance from the apparatus is not less than a field-of-view width threshold.

Optionally, the preset distance and the field-of-view width threshold depend on the video conferencing scene used, where the preset distance depends on the parameters of the wide-angle lens, and the longer the focal length of the wide-angle lens, the larger the preset distance. The field-of-view width threshold depends on a size of an object to be magnified. For example, if the object to be magnified is a speaker, the field-of-view width threshold should be the shoulder width of an adult. If the object to be magnified is a product to be displayed, the field-of-view width threshold may be set to a peripheral dimension of the product to be displayed. For example, for a distance of 2.5 m from the image acquisition apparatus, the field-of-view width threshold cannot be less than 40 cm. This is not limited in embodiments of the present application.

For example, as shown in FIG. 6, the projection of the third field-of-view area on the horizontal plane has a width of PQ at the preset distance from the apparatus, and a portion of PQ is in the field-of-view blind spot M3. In this case, if the object corresponding to PQ is magnified through either of the telephoto lenses, due to the disparity problem, neither of the telephoto lenses can acquire all the image information of PQ, which may easily cause the image to be split, making it impossible to fully magnify the object.

For example, as shown in FIGs. 7 and 8, FIGs. 7 and 8 are schematic plan views of a field-of-view area of the same image acquisition apparatus according to an embodiment of the present application. FIG. 8 illustrates that the object PQ is at a preset distance from the apparatus, and the width of PQ is exactly equal to the field-of-view width threshold of the two telephoto lenses. In this case, the object PQ may be magnified through either of the telephoto lenses.

Further, if the width of PQ is greater than the field-of-view width threshold of the two telephoto lenses, but one end of PQ is within the field-of-view area of one of the telephoto lenses, and the other end is completely within the third overlapping field-of-view area of the two telephoto lenses, then PQ occupies a larger proportion in the field-of-view area of one of the telephoto lenses, and the object PQ may be magnified through the telephoto lens with the larger proportion.

Therefore, in embodiments of the present application, the included angle between the optical axis of the telephoto lens and the optical axis of the wide-angle lens is set to be greater than or equal to half of the field of view of the telephoto lens, thereby avoiding the presence of a field-of-view blind spot of the second field-of-view area obtained through fitting for the telephoto lenses at a far distance, and ensuring that there is an overlapping area between the field-of-view areas of the telephoto lenses, which avoids the disparity problem caused by the field-of-view blind spot. In the overlapping area, images within a range of depth of field may be fully merged and stitched. The width of the overlapping area at the preset distance from the apparatus is set to be not less than the field-of-view width threshold, thereby avoiding image distortion caused by a single telephoto lens not being able to fully magnify the object, which is conducive to ensuring image integrity and improving imaging quality.

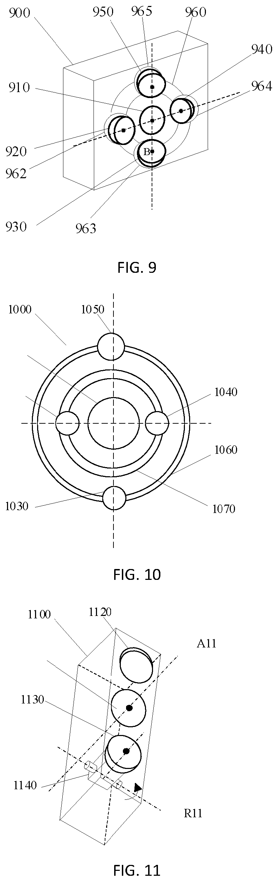

Next, refer to FIGs. 9 and 10, which are schematic diagrams of an image acquisition apparatus according to another embodiment of the present application. The apparatus further includes at least one annular rotation mechanism, where a rotation axis of each annular rotation mechanism coincides with the optical axis of the wide-angle lens, each annular rotation mechanism includes a plurality of rotation bases, each of the rotation bases is at the same distance from the optical center of the wide-angle lens, each of the rotation bases has one of the telephoto lenses provided thereon, and the rotation mechanism drives the telephoto lenses through the rotation bases to rotate around the optical axis of the wide-angle lens.

Optionally, the telephoto lens is detachably mounted on a corresponding rotation base.

Specifically, as shown in FIG. 9, taking four telephoto lenses as an example, the image acquisition apparatus shown in FIG. 9 includes a wide-angle lens 910 in the center, a telephoto lens 920, a telephoto lens 930, a telephoto lens 940, and a telephoto lens 950. The telephoto lens 920, the telephoto lens 930, the telephoto lens 940, and the telephoto lens 950 are arranged centrally symmetrically around the wide-angle lens 910. The four telephoto lenses are respectively mounted on a rotation base 962, a rotation base 963, a rotation base 964, and a rotation base 965 of an annular rotation mechanism 960.

Optionally, the rotation base is fixedly disposed relative to the annular rotation mechanism to ensure that the angles between the optical axes of the telephoto lens 920, the telephoto lens 930, the telephoto lens 940, and the telephoto lens 950 and the optical axis of the wide-angle lens 910 remain unchanged.

Optionally, the annular rotation mechanism may be mounted on the image acquisition apparatus by means of snap-fitting, and may be rotated by means of gear transmission or bearings.

Optionally, FIG. 10 is a schematic diagram of another image acquisition apparatus according to an embodiment of the present application. The apparatus 1000 has two annular rotation mechanisms, where a telephoto lens 1030 and a telephoto lens 1050 are mounted on an annular rotation mechanism 1060, and telephoto lenses 1020 and 1040 are mounted on an annular rotation mechanism 1070. The annular rotation mechanism 1060 and the annular rotation mechanism 1070 are both perfect circles, and both rotate around an optical center of a wide-angle lens 1010. A distance from the telephoto lens 1030 mounted on the annular rotation mechanism 1060 to the wide-angle lens 1010 is equal to a distance from the telephoto lens 1050 to the wide-angle lens 1010. Similarly, a distance from the telephoto lens 1020 mounted on the annular rotation mechanism 1070 to the wide-angle lens 1010 is equal to a distance from the telephoto lens 1040 to the wide-angle lens 1010. A radius of the annular rotation mechanism 1060 is greater than that of the annular rotation mechanism 1070.

Optionally, the rotation may be clockwise or counterclockwise, which is not limited in embodiments of the present application.

It can be understood that a number of annular rotation mechanisms may be provided according to actual requirements in use, which is not limited in embodiments of the present application.

In this embodiment of the present application, the telephoto lenses are mounted on the annular rotation mechanism, so that the telephoto lenses may be rotated with respect to the wide-angle lens through the annular rotation mechanism, facilitating adjustment of the orientation of the telephoto lenses. As the annular rotation mechanism is rotated, the projections of the field-of-view areas of the telephoto lenses on the horizontal plane change accordingly, based on which the field-of-view areas of the telephoto lenses may be adjusted. The image acquisition apparatus according to this embodiment of the present application may be used in a stepped conference room with a height difference by providing a plurality of annular rotation mechanisms, avoiding considering only the projections of the field-of-view areas of the telephoto lenses on the horizontal plane and ignoring the field-of-view areas in the vertical direction, and avoiding the presence of a field-of-view blind spot in the vertical direction, which is conducive to expanding the application scope of the image acquisition apparatus.

Next, refer to FIG. 11, which is a schematic diagram of a structure of an image acquisition apparatus according to another embodiment of the present application. The apparatus further includes a rotation base having the telephoto lens detachably provided thereon, where a plane in which a rotation axis of the rotation base is located is perpendicular to a plane in which the optical axis of the wide-angle lens is located, and the rotation base is configured to drive the telephoto lens to rotate around the rotation axis of the rotation base to adjust the included angle between the optical axis of the telephoto lens and the optical axis of the wide-angle lens.

For example, as shown in FIG. 11, taking two telephoto lenses as an example, the apparatus 1100 includes a wide-angle lens 1110, a telephoto lens 1120, a telephoto lens 1130, and a rotation base 1140. It can be understood that, for ease of illustration, only one rotation mechanism 1140 is shown in FIG. 11.

Optionally, through holes are provided on end faces of the rotation base 1140 corresponding to inner walls of the apparatus 1100, so that the rotation base may be rotatably connected to the apparatus by means of a pin, and the rotation base 1140 may also rotate around a rotation axis R11 by means of a hinge, a pivot, etc.

It can be understood that the rotation axis R11 is spatially perpendicular to the optical axis of the wide-angle lens A11, which may mean that a plane in which the rotation axis R11 of the rotation base 1140 is located is perpendicular to a plane in which the optical axis A11 of the wide-angle lens 1110 is located.

Preferably, in order to ensure that the telephoto lenses are arranged centrally symmetrically around the optical axis of the wide-angle lens, and that the virtual optical centers of the telephoto lenses coincide with the virtual optical center of the wide-angle lens on the optical axis of the wide-angle lens, telephoto lenses at the same distance from the optical center of the optical axis of the wide-angle lens may be configured to rotate synchronously, which may mean that when corresponding telephoto lenses are driven to rotate respectively through the rotation bases, the telephoto lenses rotate at the same angle and in the same direction.

In this embodiment of the present application, each telephoto lens is mounted on the rotation base, so that the included angle between the optical axis of the telephoto lens and the optical axis of the wide-angle lens may be adjusted. When positions of the virtual optical centers of the image acquisition apparatus are adjusted, the included angles between the optical axes of all the telephoto lenses and the optical axis of the wide-angle lens may be conveniently adjusted by adjusting the rotation base, so that the virtual optical centers coincide.

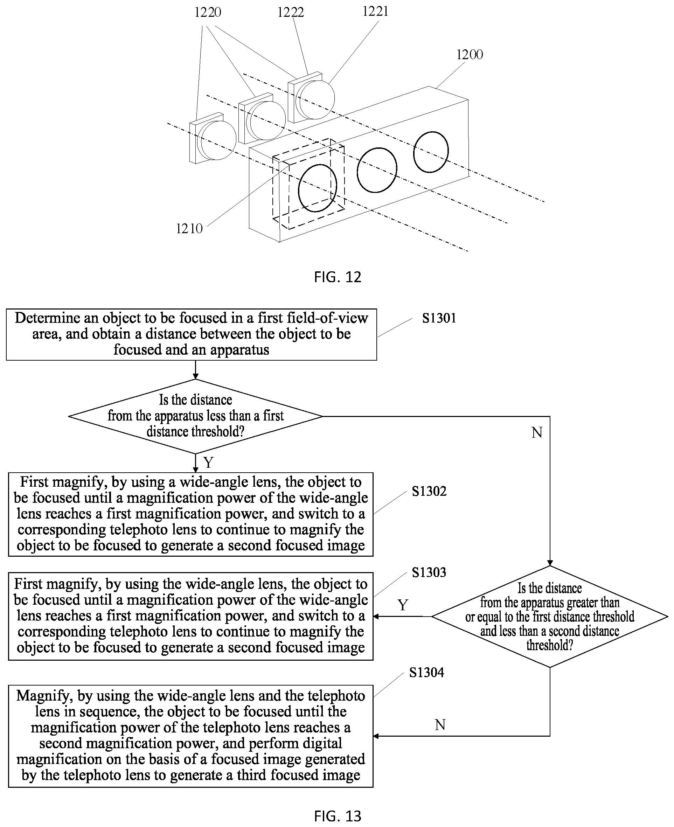

Further, an embodiment of the present application further provides a terminal based on the image processing apparatus described in the foregoing embodiments. Refer to FIG. 12, which is a schematic diagram of a structure of a terminal according to an embodiment of the present application.

Specifically, the terminal 1200 includes a housing 1210 and an image processing apparatus 1220 mounted in the housing.

Specifically, the housing 1210 has a cavity 1211, which is used to accommodate the image processing apparatus 1220. The image processing apparatus may be embedded in the cavity 1211 or mounted in the cavity 1211 by means of glue, snap-fitting, etc. Dimensions of the cavity 1211 depend on dimensions of the lens module selected for the image processing apparatus 1220.

It can be understood that the image processing apparatus 1220 includes at least two telephoto lenses and one wide-angle lens. The lenses are configured to acquire image information, and a side facing a subject is an object-side end. After the image processing apparatus 1220 is embedded in the cavity 1210, the object-side end needs to be on the outside of the housing in order to acquire image information. The other side opposing the object-side end is an eye-side end, which may be provided inside the housing 1210 of the terminal 1200.

It can be understood that the terminal may be an electronic device such as a television or a video conference, which is not limited in embodiments of the present application.

Next, with reference to FIG. 13, an image acquisition method according to an embodiment of the present application will be described by taking the terminal equipped with the above-described apparatus performing the image acquisition method as an example. Specifically, referring to FIG. 13, FIG. 13 is a schematic flowchart of an image acquisition method according to an embodiment of the present application. The method includes the following steps:
S1301: Determine an object to be focused in a first field-of-view area, and obtain a distance between the object to be focused and the apparatus.

Specifically, the wide-angle lens is the main lens, through which the first field-of-view area is obtained.

Optionally, the object to be focused may be determined by detecting a person's speech, gesture moves, etc., or the object to be focused may be actively selected.

Optionally, a proportion occupied by the outline of the object to be focused in the image may be detected to determine the distance between the object to be focused and the apparatus. Taking a size of a face as an example, if the face occupies a larger proportion of the image, it indicates that the corresponding object is at a small distance from the apparatus. The distance between the object to be focused and the apparatus may be a straight-line distance or a vertical distance to the apparatus. The distance between the object to be focused and the apparatus may be calculated by configuring sensors and algorithms.

Further, after the object to be focused is determined, a close-up of the object to be focused may be captured to generate a focused image, i.e., a close-up image.

It can be understood that since magnification powers of both the wide-angle lens and the telephoto lenses are limited, the image quality will degrade once the magnification power exceeds a specific value. Therefore, it is necessary to select a corresponding lens based on the distance between the object to be focused and the apparatus to capture a close-up of the object to be focused, in order to obtain a clear focused image.

Specifically, if the distance between the object to be focused and the apparatus is less than a first distance threshold, the method includes the following step:
S1302: Magnify, by using the wide-angle lens, the object to be focused to generate a first focused image.

The first distance threshold depends on a parameter of the wide-angle lens, where the parameter is a distance at which the image clarity does not fall below the minimum requirement when the wide-angle lens magnifies the image to the maximum magnification power of the wide-angle lens. The clarity of the lens may be evaluated by using a modulation transfer function (MTF).

When the distance between the object to be focused and the apparatus or the lens is less than the first distance threshold, the image only needs to be magnified through the wide-angle lens.

Specifically, if the distance between the object to be focused and the apparatus is greater than or equal to the first distance threshold and less than a second distance threshold, the method includes the following step:
S1303: First magnify, by using the wide-angle lens, the object to be focused until the magnification power of the wide-angle lens reaches the first magnification power, and switch to a corresponding telephoto lens to continue to magnify the object to be focused to generate a second focused image.

It can be understood that the second distance threshold depends on a parameter of the telephoto lens, where the parameter is a distance at which the image clarity does not fall below the minimum requirement when the telephoto lens magnifies the image to the maximum magnification power of the telephoto lens.

When the distance between the object to be focused and the apparatus is greater than or equal to the first distance threshold and less than the second distance threshold, the image in the first field-of-view area is first magnified through the wide-angle lens. After the image is magnified to the maximum magnification power of the wide-angle lens, the image magnified to the maximum magnification power of the wide-angle lens is mapped to the corresponding telephoto lens, through which the object to be focused is magnified again.

Specifically, if the distance between the object to be focused and the apparatus is greater than or equal to the second distance threshold, the method includes the following step:
S1304: Magnify, by using the wide-angle lens and the telephoto lens in sequence, the object to be focused until the magnification power of the telephoto lens reaches the second magnification power, and perform digital magnification on the basis of a focused image generated by the telephoto lens to generate a third focused image.

Specifically, an object to be focused at a distance greater than or equal to the second distance threshold may be magnified through the wide-angle lens and the telephoto lens in sequence with reference to steps S1302 and S1303, and may be digitally magnified after being magnified to the maximum magnification power of the telephoto lens.

It can be understood that, for a distant object, it is difficult to further magnify through the telephoto lens without loss of clarity. Therefore, it is necessary to introduce digital magnification to generate the third focused image to complete a close-up of the object.

Optionally, digital amplification methods include, but are not limited to, a nearest neighbor interpolation algorithm, a bilinear interpolation algorithm, etc., which is not limited in embodiments of the present application.

In this embodiment of the present application, the distance between the object to be focused and the apparatus is determined, and then the corresponding lens or lens and magnification algorithm may be selected for a close-up of the object to be focused, which can make the best of hardware resources. Magnification is performed through the wide-angle lens and the telephoto lens in sequence. A position of the object to be focused is determined by using the large imaging range of the wide-angle lens, and then the lens for taking a close-up of the object to be focused is determined. The combination of the wide-angle lens and the telephoto lens can achieve a close-up of the object without sacrificing image clarity, which is conducive to improving imaging quality.

An embodiment of the present application further provide a computer-readable storage medium having a computer program stored thereon that, when executed by a processor, causes the steps of the method of any one of the above-described embodiments to be implemented. The computer-readable storage medium may include, but is not limited to, any type of disk, including floppy disks, optical discs, DVDs, CD-ROMs, micro drives and magneto-optical discs, ROMs, RAMs, EPROMs, EEPROMs, DRAMs, VRAMs, flash memory devices, magnetic or optical cards, nanosystems (including molecular memory ICs), or any type of medium or device on which instructions and/or data are suitable to be stored.

According to the foregoing descriptions of the implementations, a person skilled in the art may clearly understand that the foregoing implementations may be implemented by using software plus a required universal hardware platform, or certainly may be implemented by using hardware. Based on such an understanding, a part of the technical solutions that makes a contribution essentially or to the related art may be embodied in the form of a software product. The computer software product may be stored in a computer-readable storage medium, such as a ROM/RAM, a hard disk, or an optical disc, and includes a number of instructions for instructing a computer device (which may be a personal computer, a server, a network device, or the like) to perform the methods described in embodiments or some parts of the embodiments.

It should be finally noted that the foregoing embodiments are merely used for illustrating rather than limiting the technical solutions of the present application. Although the present application is illustrated in detail with reference to the foregoing embodiments, those of ordinary skill in the art should understand that they can still make modifications to the technical solution recorded in the foregoing embodiments or make equivalent replacements for some of the technical features thereof; these modifications or replacements do not make the essence of the corresponding technical solutions depart from the spirit and scope of the technical solutions of the embodiments of the present application.

## Claims

1. An image acquisition apparatus for video conferencing, comprising:
one wide-angle lens configured to obtain a first field-of-view area; and
a plurality of telephoto lenses arranged centrally symmetrically with respect to the wide-angle lens, wherein optical axes of the plurality of telephoto lenses and an optical axis of the wide-angle lens intersect at a same virtual optical center, and an absolute value of a difference between a second field-of-view area obtained by combining field-of-view areas of the plurality of telephoto lenses and the first field-of-view area is less than a field-of-view area threshold.

2. The apparatus according to claim 1, wherein an included angle between the optical axis of the telephoto lens and the optical axis of the wide-angle lens is not less than half of a field of view of the telephoto lens.

3. The apparatus according to claim 1, wherein the telephoto lenses at the same distance from the wide-angle lens have the same field of view.

4. The apparatus according to claim 1, wherein all of the telephoto lenses have the same field of view.

5. The apparatus according to claim 1, wherein there is an overlapping third field-of-view area between the field-of-view areas of each two of the telephoto lenses, and a width of a projection of the third field-of-view area on a horizontal plane at a preset distance from the apparatus is not less than a field-of-view width threshold.

6. The apparatus according to any one of claims 1 to 5, wherein the apparatus further comprises at least one annular rotation mechanism, wherein a rotation axis of the annular rotation mechanism coincides with the optical axis of the wide-angle lens, the annular rotation mechanism comprises a plurality of rotation bases, each of the rotation bases is at the same distance from an optical center of the wide-angle lens, each of the rotation bases has one of the telephoto lenses provided thereon, and the rotation mechanism drives the telephoto lenses through the rotation bases to rotate around the optical axis of the wide-angle lens.

7. The apparatus according to any one of claims 1 to 5, wherein the apparatus further comprises a rotation base having the telephoto lens detachably provided thereon, wherein a plane in which a rotation axis of the rotation base is located is perpendicular to a plane in which the optical axis of the wide-angle lens is located, and the rotation base is configured to drive the telephoto lens to rotate around the rotation axis of the rotation base to adjust an included angle between the optical axis of the telephoto lens and the optical axis of the wide-angle lens.

8. A terminal, comprising:
a housing comprising a cavity in which the image acquisition apparatus according to any one of claims 1 to 7 is mounted,
wherein object-side ends of both the wide-angle lens and the telephoto lenses are outside the housing.

9. An image acquisition method based on the image acquisition apparatus according to any one of claims 1 to 7, the method comprising:
determining an object to be focused in the first field-of-view area, and obtaining a distance between the object to be focused and the apparatus; and
magnifying, by using the wide-angle lens, the object to be focused to generate a first focused image, in response to the distance between the object to be focused and the apparatus being less than a first distance threshold;
first magnifying, by using the wide-angle lens, the object to be focused until a magnification power of the wide-angle lens reaches a first magnification power, and switching to a corresponding telephoto lens to continue to magnify the object to be focused to generate a second focused image, in response to the distance between the object to be focused and the apparatus being greater than or equal to the first distance threshold and less than a second distance threshold; or
magnifying, by using the wide-angle lens and the telephoto lens in sequence, the object to be focused until a magnification power of the telephoto lens reaches a second magnification power, and performing digital magnification on the basis of a focused image generated by the telephoto lens to generate a third focused image, in response to the distance between the object to be focused and the apparatus being greater than or equal to the second distance threshold.

10. A non-transitory computer-readable storage medium having a computer program stored thereon, wherein the computer program, when executed by a processor, causes steps of the method according to claim 9 to be implemented.
